# EUROPÄISCHE PATENTSCHRIFT

(11) **EP 1 561 058 B1**
(45) Veröffentlichungstag und Bekanntmachung des Hinweises auf die Patenterteilung: **12.04.2006**
(21) Anmeldenummer: 03758087.5
(22) Anmeldetag: 03.11.2003
(51) Int. Cl.: F16K 31/06

(54) **ELEKTROMAGNETISCHES HYDRAULIKVENTIL, INSBESONDERE 3/2-WEGESCHALTVENTIL ZUR STEUERUNG EINES VARIABLEN VENTILTRIEBES EINER BRENNKRAFTMASCHINE**
ELECTROMAGNETIC HYDRAULIC VALVE, PARTICULARLY 3/2-WAY PILOT VALVE FOR CONTROLLING A VARIABLE VALVE DRIVE OF AN INTERNAL COMBUSTION ENGINE
ELECTROVANNE HYDRAULIQUE, NOTAMMENT DISTRIBUTEUR 3/2, POUR LA COMMANDE D'UNE DISTRIBUTION VARIABLE D'UN MOTEUR A COMBUSTION INTERNE

(30) Priorität: 12.11.2002 DE 10252431
(43) Veröffentlichungstag der Anmeldung: 10.08.2005
(73) Patentinhaber: Schaeffler KG, 91074 Herzogenaurach (DE)
(72) Erfinder: WAGNER, Werner, 96114 Hirschaid (DE); BRAUN, Armin, 96146 Altendorf (DE)
(86) Internationale Anmeldenummer: PCT/EP2003/012209
(87) Internationale Veröffentlichungsnummer: WO 2004/044467

(56) Entgegenhaltungen:
- EP-A- 1 008 791
- WO-A-98/40260
- DE-A- 4 301 670
- DE-A- 10 036 905
- DE-A- 19 810 241
- DE-A- 19 937 969
- FR-A- 2 784 439
- US-A- 4 578 662
- US-A- 5 518 029

## Beschreibung

### Gebiet der Erfindung

Die Erfindung betrifft ein elektromagnetisches Hydraulikventil nach den oberbegriffsbildenden Merkmalen des Anspruchs 1, und sie ist insbesondere vorteilhaft an einem 3/2-Wegeschaltventil zur Steuerung eines variablen Ventiltriebs einer Brennkraftmaschine realisierbar.

### Hintergrund der Erfindung

Durch die DE 198 10 241 C2 ist ein gattungsbildendes elektromagnetisches Hydraulikventil vorbekannt, welches als 3/2-Wegeschaltventil ausgebildet ist und bevorzugt in Automatikgetrieben von Kraftfahrzeugen eingesetzt wird. Dieses Hydraulikventil besteht zu einem aus einem Elektromagneten mit einer auf einen Spulenkörper angeordneten Spulenwicklung und einem die Spulenwicklung umschließenden Magnetgehäuse sowie zum anderen aus einem Hydraulikteil mit einem Ventilschaft, der einen Druckanschluss sowie einen Tankanschluss und einen Verbraucheranschluss aufweist. Der Spulenkörper des Elektromagneten und der Ventilschaft des Hydraulikteils sind dabei als einteiliger Kunststoffkörper ausgebildet, der axial eine mit verschiedenen Durchmessern ausgebildete Längsbohrung aufweist, die einenteils als Ankerraum für einen axial beweglichen Magnetanker und anderenteils als Steuerbereich für einen mit dem Magnetanker verbundenen Schließkörper ausgebildet ist. Das Magnetgehäuse am Elektromagneten des Hydraulikventils setzt sich darüber hinaus von seinem die Spulenwicklung umschließenden Mantel in einen die Stirnseite des Spulenkörpers überspannenden Abschnitt mit einem ringförmigen Bund fort, der in den als Ankerraum ausgebildeten Teil der Längsbohrung des Kunststoffkörpers hineinragt und zugleich einen oberen Magnetpol des Elektromagneten bildet. Gleichzeitig ragt von der anderen Seite ein zylindrischer Polkern in den als Ankerraum ausgebildeten Teil der Längsbohrung des Kunststoffkörpers hinein, der von einem seitlich in den Kunststoffkörper einschiebbaren Steckblech, auf dessen Enden das Magnetgehäuse aufliegt, in der Längsbohrung des Kunststoffkörpers gehalten wird und somit zusammen mit dem Steckblech einen mit dem Magnetgehäuse magnetisch leitend verbundenen unteren Magnetpol des Elektromagneten bildet. Der Polkern des unteren Magnetpols weist dabei eine umlaufende Ringnut und der Kunststoffkörper einen radial durchgehend Schlitz auf, in den das U-förmig ausgebildete Steckblech derart von außen eingeschoben wird, dass dessen beide Schenkel in die Ringnut des Polkerns eingreifen. Durch eine Vernietung wird dann das Magnetgehäuse an den beidseitig aus dem Kunststoffkörper herausragenden Enden des Steckblechs befestigt und gleichzeitig eine magnetische Verbindung zwischen beiden Bauteilen hergestellt.

Nachteilig bei diesem bekannten elektromagnetischen Hydraulikventil ist es jedoch, dass es keinerlei Befestigungselemente zur Fixierung des Hydraulikventils in einer Steckbohrung aufweist, da es zur Steuerung von Automatikgetrieben in Kraftfahrzeugen konzipiert ist und derartige, in der Regel gruppenweise nebeneinander angeordnete Wegeschaltventile zumeist in Sandwichanordnung durch eine gesonderte am Motor verschraubte Druckplatte gemeinsam in ihren Steckbohrungen axial fixiert werden. Wegeschaltventile zur Steuerung eines variablen Ventiltriebs einer Brennkraftmaschine werden jedoch zumeist in einzelnen Steckbohrungen am Motorblock der Brennkraftmaschine befestigt; so dass das bekannte Hydraulikventil für diesen Verwendungszweck erst mit zusätzlichen Befestigungselementen, die beispielsweise wie die am Magnetgehäuse des in der DE 199 37 969 A1 offenbarten Hydraulikventils angeordnete gesonderte Haltelasche oder ähnlich ausgebildet sind, ausgerüstet werden muss. Solche zusätzlichen Befestigungselemente erhöhen jedoch im allgemeinen den Fertigungs- und Materialaufwand für das Hydraulikventil und tragen somit zu einer nachteiligen Steigerung seiner Herstellungskosten bei. Dies trifft auch für den relativ massiv ausgebildeten Polkern des unteren Magnetpols des bekannten Hydraulikventils zu, der durch seine Masse nicht nur sehr materialintensiv ist sondern dadurch auch das Gewicht des Hydraulikventils nachteilig erhöht. Darüber hinaus hat sich bei dem bekannten Hydraulikventil die zweiteilige Ausbildung des unteren Magnetpols des Elektromagneten dahingehend als nachteilig erwiesen, dass die angestrebte leichte Montierbarkeit des Steckblechs am Hydraulikventil größere Toleranzen zwischen dem Steckblech und der Ringnut im Polkern bedingt und sich somit zwischen den ohnehin relativ kleinen Magnetflussübertragungsflächen beider Bauteile größere Luftspalte bilden, die den magnetischen Feldlinienübergang zwischen beiden Bauteilen noch weiter verschlechtern.

### Aufgabe der Erfindung

Der Erfindung liegt deshalb die Aufgabe zugrunde, ein elektromagnetisches Hydraulikventil, insbesondere 3/2-Wegeschaltventil zur Steuerung eines variablen Ventiltriebs einer Brennkraftmaschine, zu konzipieren, welches sich durch eine geringe Masse seiner Einzelteile sowie durch einfache und kostengünstig herstellbare Befestigungselemente für dessen Befestigung am Motorblock der Brennkraftmaschine auszeichnet und bei dem eine einfache und zuverlässige magnetische Verbindung zwischen dem unteren Magnetpol und dem Magnetgehäuse seines Elektromagneten gewährleistet ist.

### Zusammenfassung der Erfindung

Erfindungsgemäß wird diese Aufgabe bei einem elektromagnetischen Hydraulikventil nach dem Oberbegriff des Anspruchs 1 derart gelöst, dass der untere Magnetpol des Elektromagneten des Hydraulikventils durch eine in dessen Kunststoffkörper eingegossene Ringscheibe gebildet wird und durch mehrere freie Abschnitte des Außenumfangs dieser Ringscheibe sowie durch mehrere am Außenumfang dieser Ringscheibe angeordneten Radialstege sowohl als Befestigungselement des Magnetgehäuses am Hydraulikventil als auch als Befestigungselement des Hydraulikventils am Motorblock der Brennkraftmaschine ausgebildet ist.

In zweckmäßiger Weiterbildung des erfindungsgemäß ausgebildeten Hydraulikventils ist die den unteren Magnetpol bildende Ringscheibe dabei an ihrem Außenumfang bevorzugt mit drei um 120° versetzt zueinander angeordneten, kreisringsegmentförmigen Radialstegen ausgebildet, zwischen denen jeweils drei ebenfalls um 120° versetzt zueinander angeordnete freie Abschnitte verbleiben. Sowohl die Radialstege als auch die freien Abschnitte am Außenumfang dieser Ringscheibe weisen dabei in Umfangsrichtung die gleiche Segmentlänge auf, so dass sich eine symmetrische Außenkontur am Außenumfang der Ringscheibe ergibt. Es ist jedoch auch möglich, die Segmentlänge der Radialstege größer oder kleiner als die Segmentlänge der freien Abschnitte auszubilden oder auch die Radialstege und/oder die freien Abschnitte mit unregelmäßigen Segmentlängen auszubilden. Ebenso ist es möglich, anstelle von drei Radialstegen und drei freien Abschnitten am Außenumfang der Ringscheibe diese in geringerer oder größerer Anzahl in symmetrischer oder unsymmetrischer Winkelteilung versetzt zueinander am Außenumfang der Ringscheibe anzuordnen und mit gleichen oder unregelmäßigen Segmentlängen auszubilden.

Ein weiteres Merkmal der den unteren Magnetpol des erfindungsgemäß ausgebildeten Hydraulikventils bildenden Ringscheibe ist es, dass diese an ihrem Innenumfang mit einem koaxialen Ringbund ausgebildet ist, der in den als Ankerraum ausgebildeten Teil der Längsbohrung des Kunststoffkörpers hineinragt. Dieser, bevorzugt rechtwinklig zur Oberfläche der Ringscheibe an deren Innenumfang angeformte Ringbund erstreckt sich dabei in Richtung des oberen Magnetpols des Elektromagneten und dient zur Optimierung des Übergangs der Magnetfeldlinien vom oberen Magnetpol über den Magnetanker zum unteren Magnetpol des Elektromagneten. Zur Lagefixierung der Ringscheibe im Kunststoffkörper sind um diesen Ringbund herum zusätzlich mehrere koaxiale Durchbrüche in die Ringscheibe eingearbeitet, die bevorzugt als kreisrunde Stanzlöcher ausgebildet sind und in denen sich beim Spritzgießen des Kunststoffkörpers entsprechende Kunststoffübergänge bilden. Als Werkstoff für die Ringscheibe hat sich darüber hinaus ein kohlenstoffarmer unlegierter Tiefziehstahl als besonders geeignet erwiesen, so dass die Ringscheibe mit ihrer Au-ßen- und Innenkontur sowie mit den Durchbrüchen zur Lagefixierung besonders kostengünstig durch Stanzziehen in einem Folgewerkzeug herstellbar ist.

Hinsichtlich des Magnetgehäuses des Elektromagneten ist es ein weiteres Merkmal des erfindungsgemäß ausgebildeten Hydraulikventils, dass dieses durch drei um 120° versetzt zueinander Ausklinkungen an seiner ventilschaftseitigen Randpartie drei um 120° versetzt zueinander angeordnete, zinnenförmige Axialstege aufweist. Sowohl die Ausklinkungen als auch die Axialstege am Magnetgehäuse weisen dabei in Umfangsrichtung die gleiche Segmentlänge auf, so dass sich an der Randpartie des Magnetgehäuses ebenfalls eine symmetrische Außenkontur ergibt, die zwecks Befestigung des Magnetgehäuses am Hydraulikventil komplementär zu der mit drei Radialstegen und drei freien Abschnitten ausgebildeten Außenkontur des unteren Magnetpols im Kunststoffkörper ist. Bei Ausbildung des unteren Magnetpols mit mehr oder weniger als drei Radialstegen mit gleicher oder unregelmäßiger Segmentlänge in symmetrischer oder unsymmetrischer Winkelteilung zueinander ist es deshalb notwendig, die Ausklinkungen und Axialstege am Magnetgehäuse der Ausbildung der Radialstege und der freien Abschnitte am unteren Magnetpol komplementär anzupassen.

Im Montagezustand des erfindungsgemäß ausgebildeten Hydraulikventils liegen dann die Ausklinkungen des Magnetgehäuses auf den Radialstegen der den unteren Magnetpol bildenden Ringscheibe auf, während die sich zwischen die Radialstege der Ringscheibe erstreckenden Axialstege des Magnetgehäuses um die freien Abschnitte des Außenumfangs der Ringscheibe umgebördelt werden. Somit ergeben sich sowohl zwischen den Ausklinkungen des Magnetgehäuses und den Radialstegen der Ringscheibe als auch zwischen den Axialstegen des Magnetgehäuses und den freien Abschnitten des Außenumfangs der Ringscheibe ausreichend große Magnetflussübertragungsflächen, mit denen eine zuverlässige magnetische Verbindung zwischen dem unteren Magnetpol und dem Magnetgehäuse des Elektromagneten gewährleistet ist.

Zur Befestigung eines derart ausgebildeten elektromagnetischen Hydraulikventils am Motorblock der Brennkraftmaschine ist in vorteilhafter Weiterbildung der Erfindung lediglich eine entsprechend platzierte Stufenbohrung im Motorblock erforderlich, die neben dem hydraulisch notwendigen Durchmesserabstufungen einen zusätzlichen Absatz aufweist, auf den das Hydraulikventil mit den Radialstegen des unteren Magnetpols aufgesetzt wird. Der zusätzliche Absatz wird dabei durch eine an der Oberfläche des Motorblocks beginnende Durchmessererweiterung der Stufenbohrung gebildet, die einen etwa dem doppelten Außenradius der Radialstege entsprechenden Durchmesser und eine etwa der doppelten Materialstärke der Radialstege entsprechende Tiefe aufweist, so dass das Hydraulikventil durch örtliche Verdrängung von Material aus der Oberfläche des Motorblocks in die Stufenbohrung hinein, beispielsweise durch Verstemmen, auf den gebildeten Absatz in der Stufenbohrung radial und axial fixierbar ist. Als besonders kostengünstig und ausreichend hat es sich dabei erwiesen, gegenüber jedem der Radialstege am unteren Magnetpol jeweils eine linienförmige Verstemmung in Form einer Kreisbogenkerbe od. dgl. am Rand der Stufenbohrung in die Oberfläche des Motorblocks einzuarbeiten, mit der die Radialstege des unteren Magnetpols auf dem Absatz in der Stufenbohrung verklemmt werden, wobei jedoch auch punktförmige Verstemmungen denkbar sind. Anstelle einer solchen nur zerstörend wieder lösbaren Befestigung ist es jedoch auch denkbar, das Hydraulikventil durch eine zerstörungsfreie Befestigung, beispielsweise durch eine Bajonettverbindung, die durch eine in Verlängerung des Absatzes in die Wandung der Stufenbohrung eingearbeitete, umlaufende Ringnut mit axialen Einführschlitzen sowie durch in Umfangsrichtung geringfügig keilförmig ausgebildete Radialstege gebildet wird, in der Stufenbohrung im Motorblock der Brennkraftmaschine zu verklemmen. Eine weitere vorteilhafte Ausgestaltung des erfindungsgemäß ausgebildeten Hydraulikventils ist es, dass der Kunststoffkörper an der Wandung des als Ankerraum ausgebildeten Teils seiner axialen Längsbohrung mehrere gleichmä-ßig umfangsverteilt angeordneten Längsrippen aufweist, die zusammen mit dem oberen Magnetpol des Elektromagneten die Ankerführung des Magnetankers bilden. Die bevorzugt mit einer dem Abstand zwischen dem oberen Magnetpol und dem Ringbund des unteren Magnetpols entsprechenden Länge ausgebildeten Längsrippen weisen dabei eine Tiefe auf, die der Materialstärke des oberen Magnetpols entspricht, so dass eine durchgehend ebene Ankerführung im Ankerraum des Magnetankers entsteht. Von besonderen Vorteil ist dabei, dass die Längsrippen im Ankerraum nur einen linienförmigen Kontakt zum Magnetanker aufweisen und somit die Reibung zwischen der Ankerführung und dem Magnetanker bzw. dessen Hysterese verringern. Der Ringbund des unteren Magnetpols ist dagegen nicht zur Führung des Magnetankers vorgesehen, sondern weist einen geringfügig größeren Innendurchmesser als der Magnetanker auf, um zur Vermeidung eines magnetischen Kurzschlusses einen Luftspalt zwischen diesem und dem Magnetanker zu bilden. Da der so gebildete Ankerraum nach oben hin jedoch offen, hat sich darüber hinaus als vorteilhaft erwiesen, in den oberen Magnetpol zusätzlich mehrere aus dessen Oberfläche herausragende plastische Verformungen in Form von Stanzprägungen einzuarbeiten, die in gleichmäßigen Abständen parallel zur Stirnfläche des Magnetankers angeordnet und als dessen Verliersicherung ausgebildet sind.

Als weiteres Merkmal des erfindungsgemäß ausgebildeten Hydraulikventils wird es darüber hinaus vorgeschlagen, dass der als Steuerbereich ausgebildete Teil der axialen Längsbohrung des Kunststoffkörpers als örtliche Durchmesserverjüngung der Längsbohrung im Ventilschaft ausgebildet ist, welche jeweils eingangsseitig und ausgangsseitig einen ersten und einen zweiten Kugelventilsitz sowie einen Senkungsübergang zum Durchmesser der Längsbohrung aufweist. Oberhalb und unterhalb dieser Durchmesserverjüngung ist der Durchmesser der axialen Längsbohrung im Ventilschaft des Kunststoffkörpers bevorzugt etwas kleiner als der als Ankerraum ausgebildete Teil der Längsbohrung, während der als Steuerbereich ausgebildete Teil der Längsbohrung sich etwa auf ein Drittel des Durchmessers der übrigen Längsbohrung im Ventilschaft verjüngt. Die beiden Kugelventilsitze sind dabei als konkave Anfasungen des Eingangs und des Ausgangs der Durchmesserverjüngung ausgebildet, die an die Senkungsübergänge der Durchmesserverjüngung zum Durchmesser der übrigen Längsbohrung angrenzen.

Ausgehend davon zeichnet sich das erfindungsgemäß ausgebildete Hydraulikventil desweiteren dadurch aus, dass dessen Druckanschluss bevorzugt durch die Mündung der axialen Längsbohrung des Kunststoffkörpers aus der Stirnseite des Ventilschafts gebildet wird, während der Verbraucheranschluss sowie der Tankanschluss des Hydraulikventils bevorzugt als die Längsbohrung axial oberhalb und mittig ihrer Durchmesserverjüngung kreuzende Querbohrungen durch den Ventilschaft ausgebildet sind. Der Druckanschluss steht dabei über einen in die Stufenbohrung des Hydraulikventils mündenden Druckmittelkanal mit einer Druckmittelpumpe in Verbindung, während die Querbohrungen des Verbraucheranschlusses und des Tankanschlusses jeweils in Ringräume innerhalb der Stufenbohrung münden, die ihrerseits in einen Druckmittelkanal zu dem jeweiligen variablen Ventiltrieb der Brennkraftmaschine münden bzw. direkt mit dem Druckmittelreservoir der Brennkraftmaschine verbunden sind. Zusätzlich sind an der Mantelfläche der Ventilschafts des Kunststoffkörpers jeweils oberhalb und unterhalb des Verbraucheranschlusses noch zwei in umlaufenden Ringnuten gehaltene O-Ringe angeordnet, welche die einzelnen Anschlüsse des Hydraulikventils innerhalb der Stufenbohrung gegeneinander abdichten.

Weiterhin wird es als vorteilhafte Ausgestaltung des erfindungsgemäß ausgebildeten Hydraulikventils vorgeschlagen, dass der Schließkörper des Hydraulikventils im Wesentlichen aus einem Zylinderstift besteht, welcher durch dessen am Magnetanker anliegende eine Stirnseite und durch einen an dieser Stirnseite angeformten durchmesserverringerten Zentrierzapfen, der in eine Axialbohrung an der gegenüberliegenden Stirnseite des Magnetankers hineinragt, mit dem Magnetanker in Wirkverbindung steht. Aus fertigungstechnischer Sicht sowie als gewichtsreduzierende Maßnahme ist es dabei besonders vorteilhaft, den Magnetanker als einseitig offenen Hohlzylinder auszubilden, der als Fließpressteil herstellbar ist und aus dessen Boden ein Lochdurchbruch als Axialbohrung für den Zentrierzapfen des Schließkörpers ausgestanzt wird.

Desweiteren weist der Schließkörper des erfindungsgemäß ausgebildeten Hydraulikventils an der Mantelfläche des Zylinderstiftes mehrere sich radial weg erstreckende Axialführungsrippen auf, mit denen der Schließkörper in der Längsbohrung des Kunststoffkörpers zentriert wird. Die Zentrierung des Schließkörpers mittels solcher Axialführungsrippen hat sich deshalb als vorteilhaft erwiesen, da die Axialführungsrippen in Höhe des Tankanschlusses an der Innenwandung der Längsbohrung des Kunststoffkörpers entlang gleiten und es somit durch die Abstände zwischen den Axialführungsrippen am Schließkörper gewährleistet ist, dass das Druckmittel innerhalb des Hydraulikventils ungehindert vom Verbraucheranschluss entlang des Schließkörpers zum Tankanschluss des Hydraulikventils und von dort zwischen den Radialstegen des unteren Magnetpols hindurch aus der Stufenbohrung in das Druckmittelreservoir der Brennkraftmaschine abgeleitet werden kann. Als besonders zweckmäßig haben sich deshalb vier um 90° versetzt zueinander an der Mantelfläche des Zylinderstiftes angeordneten Axialführungsrippen erwiesen, deren Führungsflächen eine dem Durchmesser der Längsbohrung entsprechende Verrundung aufweisen und zwischen denen ausreichend große Freiräume entstehen, durch welche das Druckmittel ungehindert abströmen kann. Denkbar wäre es jedoch auch, anstelle von vier Axialführungsrippen nur drei oder fünf solcher Axialführungsrippen an der Mantelfläche des Zylinderstiftes anzuordnen oder die Axialführungsrippen in äquivalenter Weise an die Innenwandung der Längsbohrung des Kunststoffkörpers anzuformen und den Schließkörper als Zylinderstift mit ebener Mantelfläche auszubilden.

Schließlich wird es in weiterer Ausgestaltung des erfindungsgemäß ausgebildeten Hydraulikventils noch vorgeschlagen, dass der Schließkörper an seiner anderen Stirnseite als Halbkugel ausgebildet ist, die mit dem ersten Kugelventilsitz an der Durchmesserverjüngung der Längsbohrung des Kunststoffkörpers in Wechselwirkung steht. Diese Halbkugel wird bei Bestromung des Elektromagneten und der dadurch bedingten Axialbewegung des Magnetankers und des Schließkörpers in den ersten Ventilsitz eingepresst, so dass die im unbestromten Zustand des Elektromagneten permanent geöffnete Verbindung zwischen dem Verbraucheranschluss und dem Tankanschluss des Hydraulikventils geschlossen wird. Zusätzlich weist der Schließkörper an der mit der Halbkugel ausgebildeten Stirnseite des Zylinderstiftes eine durch die Durchmesserverjüngung hindurch ragende Stößelstange auf, die mit einer mit dem zweiten Kugelventilsitz an der Durchmesserverjüngung der Längsbohrung des Kunststoffkörpers in Wechselbeziehung stehenden losen Schließkugel in Wirkverbindung steht. Diese Schließkugel wird in einem in der Mündung der axialen Längsbohrung des Kunststoffkörpers angeordneten Käfig, der bevorzugt durch mehrere koaxial an die Durchmesserverjüngung der Längsbohrung des Kunststoffkörpers angeformte elastische Arme gebildet wird, axial beweglich gehalten und wird bei anliegendem Druckmitteldruck permanent in den zweiten Kugelventilsitz gepresst. Dadurch ist gewährleistet, dass im stromlosen Zustand des Elektromagneten der Druckanschluss des Hydraulikventils geschlossen und die Verbindung des Verbraucheranschlusses mit dem Tankanschluss des Hydraulikventils geöffnet bleibt. Bei Bestromung des Elektromagneten wird dann gleichzeitig mit dem Verschließen der Verbindung zwischen dem Verbraucheranschluss und dem Tankanschluss die Verbindung zwischen dem Druckanschluss und dem Verbraucheranschluss geöffnet, indem der Schließkörper über die Stößelstange an seiner anderen Stirnseite die Schließkugel aus dem zweiten Ventilsitz gegen den Druck des hydraulischen Druckmittels herausdrückt. Über die Längsbohrung in der Durchmesserverjüngung des Kunststoffkörpers und die die Längsbohrung kreuzende Querbohrung des Verbraucheranschlusses des Hydraulikventils kann somit der hydraulische Verbraucher mit dem hydraulischen Druckmittel versorgt werden. Beim Abschalten der Bestromung des Elektromagneten wird die lose Schließkugel dann durch den Druckmitteldruck wieder in den zweiten Kugelventilsitz in der Durchmesserverjüngung der Längsbohrung des Kunststoffkörpers eingepresst, so dass der Druckanschluss des Hydraulikventils wieder verschlossen wird und durch die Verbindung der Schließkugel mit der Stößelstange des Schließkörpers sowohl der Schließkörper als auch der Magnetanker des Elektromagneten wieder in ihre Ausgangsstellung axial verschoben werden.
Das erfindungsgemäß ausgebildete elektromagnetische Hydraulikventil, insbesondere 3/2-Wegeschaltventil zur Steuerung eines variablen Ventiltriebs einer Brennkraftmaschine, weist somit gegenüber den aus dem Stand der Technik bekannten Hydraulikventilen den Vorteil auf, dass der in den Kunststoffkörper des Hydraulikventils eingegossene untere Magnetpol des Elektromagneten, der als einfache Ringscheibe mit mehreren Radialstegen sowie mit mehreren freien Abschnitten an deren Außenumfang ausgebildet ist, zusätzlich zu seinen elektromagnetischen Funktionen sowohl als Befestigungselement des Magnetgehäuses am Hydraulikventil als auch als Befestigungselement des Hydraulikventils am Motorblock der Brennkraftmaschine ausgebildet ist. Dadurch ist eine Ausrüstung des Hydraulikventils mit zusätzlichen Befestigungselementen, wie gesonderte Haltelaschen oder der gleichen nicht mehr notwendig, so dass der Fertigungs- und Materialaufwand für das erfindungsgemäße Hydraulikventil und durch dessen einfache Befestigung mittels Verstemmen gleichzeitig auch dessen Montageaufwand an der Brennkraftmaschine verringert wird. Ebenso werden durch das auf dem unteren Magnetpol aufsitzende sowie um diesen herum gebördelte Magnetgehäuse große Magnetflussübertragungsflächen zwischen beiden Bauteilen gebildet, so dass zwischen dem unteren Magnetpol und dem Magnetgehäuse des Elektromagneten eine zuverlässige magnetische Verbindung gewährleistet ist. Darüber hinaus sind sämtliche Metallteile des erfindungsgemäßen Hydraulikventils in kostengünstiger Weise durch spanlose Fertigungsverfahren herstellbar sowie gewichtsreduziert ausgebildet, so dass insgesamt mit einer erheblichen Senkung der Herstellungskosten für das Hydraulikventil zu rechnen ist.

### Kurze Beschreibung der Zeichnungen

Die Erfindung wird nachfolgend anhand eines Ausführungsbeispiels näher erläutert und ist in den zugehörigen Zeichnungen schematisch dargestellt. Dabei zeigen:
- Figur 1: einen Längsschnitt durch ein am Motorblock einer Brennkraftmaschine montiertes, erfindungsgemäßes Hydraulikventil;
- Figur 2: eine räumliche Darstellung des erfindungsgemäßen Hydraulikventils vor der Montage des Magnetgehäuses;
- Figur3: eine räumliche Darstellung des erfindungsgemäßen Hydraulikventils nach der Montage des Magnetgehäuses;
- Figur 4: eine räumliche Darstellung des erfindungsgemäßen Hydraulikventils nach dessen Montage am Motorblock der Brennkraftmaschine;
- Figur 5: eine räumliche Einzelteildarstellung des Schließkörpers des erfindungsgemäßen Hydraulikventils;
- Figur 6: eine räumliche Einzelteildarstellung des unteren Magnetpols des erfindungsgemäßen Hydraulikventils.

### Ausführliche Beschreibung der Zeichnungen

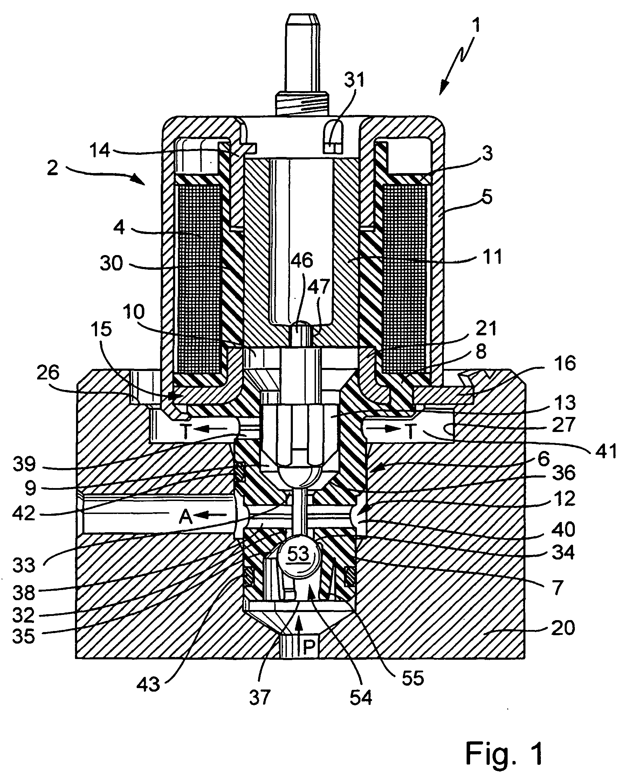

Aus Figur 1 geht deutlich ein elektromagnetisches Hydraulikventil 1 hervor, welches als 3/2-Wegeschaltventil ausgebildet und zur Steuerung eines variablen Ventiltriebs einer Brennkraftmaschine einsetzbar ist. Dieses Hydraulikventil 1 besteht zum einen aus einem Elektromagnet 2 mit einer auf einem Spulenkörper 3 angeordneten Spulenwicklung 4 und einem die Spulenwicklung 4 umschließenden Magnetgehäuse 5 sowie zum anderen aus einem Hydraulikteil 6, dass durch einen Ventilschaft 7 mit einem Druckanschluss P, einem Tankanschluss T und einem Verbraucheranschluss A gebildet wird. Weiterhin ist aus Figur 1 ersichtlich, dass der Spulenkörper 3 des Elektromagneten 2 und der Ventilschaft 7 des Hydraulikteils 6 als einteiliger Kunststoffkörper 8 ausgebildet sind, der eine axiale Längsbohrung 9 mit verschiedenen Durchmessern aufweist, welche einenteils als Ankerraum 10 für einen axial beweglichen Magnetanker 11 und anderenteils als Steuerbereich 12 für einen mit dem Magnetanker 11 verbundenen Schließkörper 13 ausgebildet ist. Das Magnetgehäuse 5 des Elektromagneten 2 setzt sich darüber hinaus von seinem die Spulenwicklung 4 umschließenden Mantel in einen die Stirnseite des Spulenkörpers 3 überspannenden Abschnitt mit einem ringförmigen Bund fort, der in den als Ankerraum 10 ausgebildeten Teil der Längsbohrung 9 des Kunststoffkörpers 8 hineinragt und zugleich einen oberen Magnetpol 14 des Elektromagneten 2 bildet.

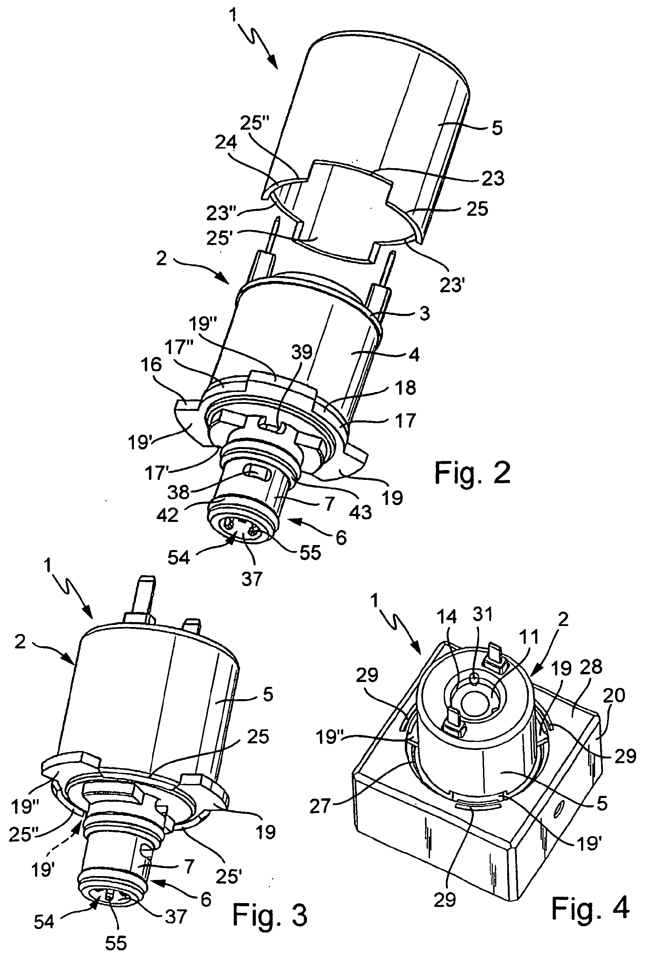

Desweiteren ist in Figur 1 deutlich erkennbar, dass ein mit dem Magnetgehäuse 5 magnetisch leitend verbundener unterer Magnetpol 15 des Elektromagneten 2 ebenfalls in den als Ankerraum 10 ausgebildeten Teil der Längsbohrung 9 des Kunststoffkörpers 8 hineinragt und erfindungsgemäß durch eine in den Kunststoffkörper 8 eingegossene Ringscheibe 16 gebildet wird. Die Figuren 2, 3 und 4 zeigen dabei, dass diese Ringscheibe 16 an ihrem Außenumfang 18 mehrere freie Abschnitte 17, 17', 17" sowie mehrere Radialstege 19, 19', 19" aufweist, so dass der untere Magnetpol 15 des Elektromagneten 2 des Hydraulikventils 1 erfindungsgemäß sowohl als Befestigungselement des Magnetgehäuses 5 am Hydraulikventil 1 als auch als Befestigungselement des Hydraulikventils 1 am Motorblock 20 der Brennkraftmaschine verwendbar ist.

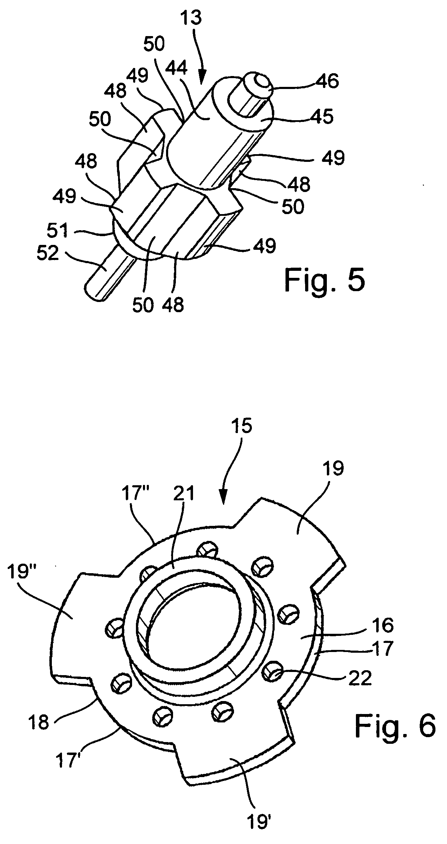

Durch die räumliche Darstellung gemäß Figur 6 wird darüber hinaus deutlich, dass die den unteren Magnetpol 15 bildende Ringscheibe 16 in konkreter Ausführung an ihrem Außenumfang 18 mit drei um 120° versetzt zueinander angeordneten, kreisringsegmentförmigen Radialstegen 19, 19', 19" sowie mit drei um 120° versetzt zueinander angeordneten freien Abschnitten 17, 17', 17" ausgebildet ist, die in Umfangsrichtung jeweils eine gleiche Segmentlänge aufweisen. Ebenso ist in Figur 6 im Zusammenhang mit Figur 1 zu sehen, dass die Ringscheibe 16 an ihrem Innenumfang mit einem koaxialen Ringbund 21 ausgebildet ist, der in den als Ankerraum 10 ausgebildeten Teil der Längsbohrung 9 des Kunststoffkörpers 8 hineinragt und zur Optimierung des Magnetfeldlinienverlaufes vom oberen Magnetpol 14 über den Magnetanker 11 zum unteren Magnetpol 15 des Elektromagneten 2 dient. Zur Lagefixierung der Ringscheibe 16 im Kunststoffkörper 8 sind um diesen Ringbund 21 zusätzlich mehrere koaxiale Durchbrüche 22 in die Ringscheibe 21 eingearbeitet, in denen sich beim Spritzgießen des Kunststoffkörpers 8 entsprechende Kunststoffübergänge, wie sie in Figur 1 angedeutet sind, bilden.
Aus Figur 2 geht desweiteren deutlich hervor, dass das Magnetgehäuse 5 des Elektromagneten 2 im unmontierten Zustand des Hydraulikventils 1 durch drei um 120° versetzt zueinander angeordnete Ausklinkungen 23, 23', 23" an seiner ventilschaftseitigen Randpartie 24 drei um 120° versetzt zueinander angeordnete, zinnenförmige Axialstege 25, 25', 25" aufweist. Diese Axialstege 25, 25', 25" sind komplementär zu dem mit drei Radialstegen 19, 19', 19" und drei freien Abschnitten 17, 17', 17" ausgebildeten unteren Magnetpol 15 ausgebildet und weisen deshalb in Umfangsrichtung ebenfalls jeweils eine gleiche Segmentlänge auf. Durch eine derartige Ausbildung des Magnetgehäuses 5 liegen in dem in Figur 3 gezeigten montierten Zustand des Hydraulikventils 1 die Ausklinkungen 23, 23', 23" auf den Radialstegen 19, 19', 19" des unteren Magnetpols 15 auf, während die sich zwischen die Radialstege 19, 19', 19" des unteren Magnetpols 15 erstreckenden Axialstege 25, 25', 25" des Magnetgehäuses 5 um die freien Abschnitte 17, 17', 17" des Außenumfangs 18 des unteren Magnetpols 15 umgebördelt sind.

Die Befestigung des Hydraulikventils 1 am Motorblock 20 der Brennkraftmaschine wird am besten in den Figuren 1 und 4 veranschaulicht, in denen deutlich zu sehen ist, dass das Hydraulikventil 1 mit den Radialstegen 19, 19', 19" des unteren Magnetpols 15 auf einem zusätzlichen Absatz 26 einer Stufenbohrung 27 im Motorblock 20 der Brennkraftmaschine aufliegt und durch örtliche Verdrängung von Material aus der Oberfläche 28 des Motorblocks 20 in die Stufenbohrung 27 an diesem radial und axial fixiert ist. Die Verdrängung des Materials erfolgt dabei in kostengünstiger Weise jeweils durch eine linienförmige Verstemmung in Form einer Kreisbogenkerbe 29, die gegenüber jedem der Radialstege 19, 19', 19" des unteren Magnetpols 15 am Rand der Stufenbohrung 27 in die Oberfläche 28 des Motorblocks 20 eingearbeitet ist.

Hinsichtlich des weiteren Aufbaus des erfindungsgemäß ausgebildeten Hydraulikventils 1 ist aus Figur 1 noch entnehmbar, dass der Kunststoffkörper 8 an der Wandung des als Ankerraum 10 ausgebildeten Teils seiner axialen Längsbohrung 9 mehrere gleichmäßig umfangsverteilt angeordnete Längsrippen 30 aufweist, die zusammen mit dem oberen Magnetpol 14 eine durchgehend ebene Ankerführung des Magnetankers 11 des Elektromagneten 2 bilden. Der somit nach oben offene Ankerraum 10 wird dabei zusätzlich mit einer Verliersicherung für den Magnetanker 11 versehen, indem in den oberen Magnetpol 14 mehrere aus dessen Oberfläche herausragende Stanzprägungen 31 eingearbeitet werden, die in gleichmäßigen Abständen parallel zur Stirnfläche des Magnetankers 11 angeordnet sind.

Der als Steuerbereich 12 ausgebildete Teil der axialen Längsbohrung 9 des Kunststoffkörpers 8 ist dagegen, wie ebenfalls aus Figur 1 ersichtlich ist, in konkreter Ausführung als örtliche Durchmesserverjüngung 32 der Längsbohrung 9 im Ventilschaft 7 ausgebildet, welche jeweils eingangsseitig und ausgangsseitig einen ersten Kugelventilsitz 33 und einen zweiten Kugelventilsitz 34 sowie einen Senkungsübergang 35 beziehungsweise 36 zum Durchmesser der Längsbohrung 9 des Kunststoffkörpers 8 aufweist. Die beiden Kugelventilsitze 33 und 34 sind dabei als konkave Anfasungen des Eingangs und des Ausgangs der Durchmesserverjüngung 32 ausgebildet, die an die Senkungsübergänge 35, 36 der Durchmesserverjüngung 32 zum Durchmesser der übrigen Längsbohrung 9 angrenzen.

Ausgehend davon wird bei dem in Figur 1 dargestellten erfindungsgemäßen Hydraulikventil 1 der Druckanschluss P durch die Mündung 37 der axialen Längsbohrung 9 des Kunststoffkörpers 8 aus dem Ventilschaft 7 gebildet, während der Verbraucheranschluss A sowie der Tankanschluss T als die Längsbohrung 9 axial oberhalb und mittig ihrer Durchmesserverjüngung 32 kreuzende Querbohrungen 38, 39 durch den Ventilschaft 7 ausgebildet sind. Der Druckanschluss P steht dabei über einen in die Stufenbohrung 27 mündenden, nicht näher bezeichneten Druckmittelkanal mit einer nicht dargestellten Druckmittelpumpe in Verbindung, während die Querbohrungen 38, 39 des Verbraucheranschlusses A und des Tankanschlusses T deutlich sichtbar jeweils in Ringräume 40, 41 münden, die ihrerseits mit dem jeweiligen variablen Ventiltrieb bzw. mit dem Druckmittelreservoir der Brennkraftmaschine verbunden sind. Durch zwei jeweils oberhalb und unterhalb des Verbraucheranschlusses A in umlaufenden Ringnuten an der Mantelfläche des Ventilschafts 7 gehaltene O-Ringe 42 43 werden die einzelnen Anschlüsse des Hydraulikventils 1 dann innerhalb der Stufenbohrung 27 im Motorblock 20 gegeneinander abgedichtet.

In Figur 5 ist schließlich noch der Schließkörper 13 des erfindungsgemäßen Hydraulikventils 1 in einer räumlichen Darstellung abgebildet, aus der erkennbar ist, dass dieser im Wesentlichen aus einem Zylinderstift 44 besteht, welcher durch dessen am Magnetanker 11 anliegende eine Stirnseite 45 und durch einen an diese Stirnseite 45 angeformten und in eine Axialbohrung 47 des Magnetankers 11 hinein ragenden Zentrierzapfen 46 in der in Figur 1 gezeigten Weise lose mit dem hohlzylindrisch ausgebildeten Magnetanker 11 in Wirkverbindung steht. An der Mantelfläche des Zylinderstiftes 44 sind darüber hinaus vier sich radial wegerstreckende Axialführungsrippen 48 angeordnet, mit denen der Schließkörper 13, wie in Figur 1 angedeutet, in der Längsbohrung 9 des Kunststoffkörpers 8 zentriert wird. Zwischen diesen um 90° versetzt zueinander angeordneten und an ihren Führungsflächen mit einer dem Durchmesser der Längsbohrung 9 entsprechenden Verrundung 49 ausgebildeten Axialführungsrippen 48 sind ausreichend große Freiräume 50 vorgesehen, durch welche das hydraulische Druckmittel innerhalb des Hydraulikventils 1 ungehindert vom Verbraucheranschluss A zum Tankanschluss T und von dort aus der Stufenbohrung 27 im Motorblock 20 abgeleitet werden kann.

An der anderen Stirnseite 51 des Zylinderstiftes 44 ist der Schließkörper 13 dagegen, wie ebenfalls aus Figur 5 hervorgeht, als Halbkugel ausgebildet, die mit dem ersten Kugelventilsitz 33 an der Durchmesserverjüngung 32 der Längsbohrung 9 des Kunststoffkörpers 8 in Wechselwirkung steht. Zusätzlich ist an diese Stirnseite 51 des Zylinderstiftes 44 eine Stößelstange 52 angeformt, die, wie in Figur 1 zu sehen ist, durch die Durchmesserverjüngung 32 der Längsbohrung 9 des Kunststoffkörpers 8 hindurch ragt und mit einer mit dem zweiten Kugelventilsitz 36 an der Durchmesserverjüngung 32 der Längsbohrung 9 in Wechselbeziehung stehenden losen Schließkugel 53 in Wirkverbindung steht. Durch Figur 1 wird dabei ebenfalls deutlich, dass diese lose Schließkugel 53 in einem in der Mündung 37 der axialen Längsbohrung 9 des Kunststoffkörpers 8 angeordneten Käfig 54 axial beweglich gehalten wird und durch den anliegenden Druckmitteldruck permanent den zweiten Kugelventilsitz 34 bzw. den Druckanschluss P des Hydraulikventils 1 verschließt. Der Käfig 54 wird dabei durch mehrere koaxial an die Durchmesserverjüngung 32 der Längsbohrung 9 des Kunststoffkörpers 8 angeformte elastische Arme 55 gebildet, die an ihren Enden mit nicht näher bezeichneten Haltekrallen ausgebildet sind und mit der Mündung 37 des Ventilschafts 7 abschließen.

### Bezugszahlenliste

- 1: Hydraulikventil
- 2: Elektromagnet
- 3: Spulenkörper
- 4: Spulenwicklung
- 5: Magnetgehäuse
- 6: Hydraulikventil
- 7: Ventilschaft
- 8: Kunststoffkörper
- 9: Längsbohrung
- 10: Ankerraum
- 11: Magnetanker
- 12: Steuerbereich
- 13: Schließkörper
- 14: oberer Magnetpol
- 15: unterer Magnetpol
- 16: Ringscheibe
- 17, 17', 17": freie Abschnitte
- 18: Außenumfang
- 19, 19', 19": Radialstege
- 20: Motorblock
- 21: Ringbund
- 22: Durchbrüche
- 23, 23', 23": Ausklinkungen
- 24: Randpartie
- 25, 25', 25": Axialstege
- 26: Absatz
- 27: Stufenbohrung
- 28: Oberfläche
- 29: Kreisbogenkerbe
- 30: Längsrippe
- 31: Stanzprägungen
- 32: Durchmesserverjüngung
- 33: Kugelventilsitz
- 34: Kugelventilsitz
- 35: Senkungsübergang
- 36: Senkungsübergang
- 37: Mündung
- 38: Querbohrung
- 39: Querbohrung
- 40: Ringraum
- 41: Ringraum
- 42: O-Ring
- 43: O-Ring
- 44: Zylinderstift
- 45: Stirnseite
- 46: Zentrierzapfen
- 47: Axialbohrung
- 48: Axialführungsrippen
- 49: Verrundung
- 50: Freiräume
- 51: Stirnseite
- 52: Stößelstange
- 53: Schließkugel
- 54: Käfig
- 55: Arme
- P: Druckanschluss
- T: Tankanschluss
- A: Verbraucheranschluss

## Patentansprüche

1. Elektromagnetisches Hydraulikventil, insbesondere 3/2-Wegeschaltventil zur Steuerung eines variablen Ventiltriebes einer Brennkraftmaschine, mit folgenden Merkmalen:
■ das Hydraulikventil (1) besteht zum einen aus einem Elektromagnet (2) mit einer auf einem Spulenkörper (3) angeordneten Spulenwicklung (4) und einem die Spulenwicklung (4) umschließenden Magnetgehäuse (5),
■ das Hydraulikventil (1) besteht zum anderen aus einem Hydraulikteil (6) mit einem Ventilschaft (7), der einen Druckanschluss (P) sowie einen Tankanschluss (T) und einen Verbraucheranschluss (A) aufweist,
■ der Spulenkörper (3) des Elektromagneten (2) und der Ventilschaft (7) des Hydraulikteils (6) sind als einteiliger Kunststoffkörper (8) ausgebildet, der axial eine Längsbohrung (9) mit verschiedenen Durchmessern aufweist,
■ die Längsbohrung (9) ist einenteils als Ankerraum (10) für einen axial beweglichen Magnetanker (11) und anderenteils als Steuerbereich (12) für einen mit dem Magnetanker (11) verbundenen Schließkörper (13) ausgebildet,
■ das Magnetgehäuse (5) bildet mit einem in den Ankerraum (10) der Längsbohrung (9) des Kunststoffkörpers (8) hineinragenden ringförmigen Bund zugleich einen oberen Magnetpol (14) des Elektromagneten (2),
■ ein unterer Magnetpol (15) des Elektromagneten (2) ragt ebenfalls in den Ankerraum (10) der Längsbohrung (9) des Kunststoffkörpers (8) hinein und ist mit dem Magnetgehäuse (5) magnetisch leitend verbunden,
**dadurch gekennzeichnet, dass**
■ der untere Magnetpol (15) des Elektromagneten (2) des Hydraulikventils (1) durch eine in dessen Kunststoffkörper (8) eingegossene Ringscheibe (16) gebildet wird und durch mehrere freie Abschnitte (17, 17', 17") des Außenumfangs (18) dieser Ringscheibe (16) sowie durch mehrere am Außenumfang (18) dieser Ringscheibe (16) angeordnete Radialstege (19, 19', 19") sowohl als Befestigungselement des Magnetgehäuses (5) am Hydraulikventil (1) als auch als Befestigungselement des Hydraulikventils (1) am Motorblock (20) der Brennkraftmaschine ausgebildet ist.

2. Hydraulikventil nach Anspruch 1, **dadurch gekennzeichnet, dass** die den un-teren Magnetpol (15) bildende Ringscheibe (16) an ihrem Außenumfang (18) bevorzugt mit drei um 120° versetzt zueinander angeordneten, kreisringseg-mentförmigen Radialstegen (19, 19', 19") sowie mit drei um 120° versetzt zueinander angeordneten freien Abschnitten (17, 17', 17") ausgebildet ist, die in Umfangsrichtung jeweils eine gleiche Segmentlänge aufweisen.

3. Hydraulikventil nach Anspruch 2, **dadurch gekennzeichnet, dass** die den unteren Magnetpol (15) bildende Ringscheibe (16) an ihrem Innenumfang mit einem in den Ankerraum (10) der Längsbohrung (9) des Kunststoffkörpers (8) hineinragenden koaxialen Ringbund (21) ausgebildet ist, um den mehrere koaxiale Durchbrüche (22) als Kunststoffübergänge zur Lagefixierung der Ringscheibe (16) im Kunststoffkörper (8) angeordnet sind.

4. Hydraulikventil nach Anspruch 2, **dadurch gekennzeichnet, dass** das Magnetgehäuse (5) des Elektromagneten (2) bevorzugt durch drei um 120° versetzt zueinander angeordnete Ausklinkungen (23, 23', 23") an seiner ventilschaftseitigen Randpartie (24) drei um 120° versetzt zueinander angeordnete, zinnenförmige Axialstege (25, 25', 25") aufweist, die in Umfangsrichtung jeweils eine gleiche Segmentlänge aufweisen.

5. Hydraulikventil nach Anspruch 4, **dadurch gekennzeichnet, dass** die Ausklinkungen (23, 23', 23") des Magnetgehäuses (5) im Montagezustand des Hydraulikventils (1) auf den Radialstegen (19, 19', 19") des unteren Magnetpols (15) aufliegen, während die sich zwischen die Radialstege (19, 19', 19") des unteren Magnetpols (15) erstreckenden Axialstege (25, 25', 25") des Magnetgehäuses (5) um die freien Abschnitte (17, 17', 17") des Außenumfangs (18) des unteren Magnetpols (15) umgebördelt sind.

6. Hydraulikventil nach Anspruch 1, **dadurch gekennzeichnet, dass** das Hydrau-likventil (1) mit den Radialstegen (19, 19', 19") des unteren Magnetpols (15) auf einem Absatz (26) einer Stufenbohrung (27) im Motorblock (20) der Brennkraftmaschine aufliegend angeordnet und durch örtliche Verdrängung von Material aus der Oberfläche (28) des Motorblocks (20) in die Stufenbohrung (27), beispielsweise durch Verstemmen, an diesem radial und axial fixierbar ist.

7. Hydraulikventil nach Anspruch 3, **dadurch gekennzeichnet, dass** der Kunststoffkörper (8) an der Wandung des als Ankerraum (10) ausgebildeten Teils seiner axialen Längsbohrung (9) mehrere gleichmäßig umfangsverteilt angeordnete Längsrippen (30) aufweist, die zusammen mit dem oberen Magnetpol (14) des Elektromagneten (2) eine durchgehend ebene Ankerführung des Magnetankers (11) bilden.

8. Hydraulikventil nach Anspruch 1, **dadurch gekennzeichnet, dass** der als Steuerbereich (12) ausgebildete Teil der axialen Längsbohrung (9) des Kunststoffkörpers (8) als örtliche Durchmesserverjüngung (32) der Längsbohrung (9) im Ventilschaft (7) ausgebildet ist, welche jeweils eingangsseitig und ausgangsseitig einen ersten und einen zweiten Kugelventilsitz (33, 34) sowie einen Senkungsübergang (35, 36) zum Durchmesser der Längsbohrung (9) des Kunststoffkörpers (8) aufweist.

9. Hydraulikventil nach Anspruch 8, **dadurch gekennzeichnet, dass** der Druckanschluss (P) bevorzugt durch die Mündung (37) der axialen Längsbohrung (9) des Kunststoffkörpers (8) aus dem Ventilschaft (7) gebildet wird, während der Verbraucheranschluss (A) sowie der Tankanschluss (T) bevorzugt als die Längsbohrung (9) axial oberhalb und mittig ihrer Durchmesserverjüngung (32) kreuzende Querbohrungen (38, 39) durch den Ventilschaft (7) ausgebildet sind.

10. Hydraulikventil nach Anspruch 9, **dadurch gekennzeichnet, dass** der Schließkörper (13) des Hydraulikventils (1) im Wesentlichen aus einem Zylinderstift (44) besteht, welcher durch dessen am Magnetanker (11) anliegende eine Stirnseite (45) und durch einen an dieser Stirnseite (45) angeformten durchmesserverringerten Zentrierzapfen (46), der in eine Axialbohrung (47) des Magnetankers (11) hineinragt, mit dem Magnetanker (11) in Wirkverbindung steht.

11. Hydraulikventil nach Anspruch 10, **dadurch gekennzeichnet, dass** der Schließkörper (13) an der Mantelfläche des Zylinderstiftes (44) mehrere sich radial wegerstreckende Axialführungsrippen (48) für dessen Zentrierung in der Längsbohrung (9) des Kunststoffkörpers (8) aufweist und an seiner anderen Stirnseite (51) als Halbkugel ausgebildet ist, die mit dem ersten Kugelventilsitz (35) an der Durchmesserverjüngung (32) der Längsbohrung (9) korreliert.

12. Hydraulikventil nach Anspruch 11, **dadurch gekennzeichnet, dass** der Schließkörper (13) an der anderen Stirnseite (51) des Zylinderstiftes (44) zusätzlich eine durch die Durchmesserverjüngung (32) der Längsbohrung (9) des Kunststoffkörpers (8) hindurchragende Stößelstange (52) aufweist, die mit einer mit dem zweiten Kugelventilsitz (36) an der Durchmesserverjüngung (32) der Lärigsbohrung (9) korrelierenden losen Schließkugel (53) in Wirkverbindung steht.

13. Hydraulikventil nach Anspruch 12, **dadurch gekennzeichnet, dass** die mit dem zweiten Kugelventilsitz (36) korrelierende lose Schließkugel (53) in einem in der Mündung (37) der axialen Längsbohrung (9) des Kunststoffkörpers (8) angeordneten Käfig (54), der bevorzugt durch mehrere koaxial an die Durchmesserverjüngung (32) der Längsbohrung (9) des Kunststoffkörpers (8) angeformte, elastische Arme (55) gebildet wird, axial beweglich gehalten wird.

## Claims

1. Electromagnetic hydraulic valve, particularly a 3/2-way directional control valve for controlling a variable valve drive of an internal combustion engine, having the following features:
- the hydraulic valve (1) consists on the one hand of an electromagnet (2) having a coil winding (4), arranged on a spool (3), and a magnet housing (5) enclosing the coil winding (4),
- the hydraulic valve (1) consists on the other hand of a hydraulic part (6) having a valve stem (7) which has a pressure connection (P) and also a tank connection (T) and a consumer connection (A),
- the spool (3) of the electromagnet (2) and the valve stem (7) of the hydraulic part (6) are designed as a one-piece plastic body (8) which has an axial longitudinal bore (9) having different diameters,
- the longitudinal bore (9) is designed on the one hand as an armature space (10) for an axially movable magnet armature (11) and on the other hand as a control region (12) for a closing body (13) connected to the magnet armature (11),
- the magnet housing (5), with an annular collar which projects into the armature space (10) of the longitudinal bore (9) of the plastic body (8), at the same time forms a top magnet pole (14) of the electromagnet (2),
- a bottom magnet pole (15) of the electromagnet (2) likewise projects into the armature space (10) of the longitudinal bore (9) of the plastic body (8) and is connected to the magnet housing (5) in a magnetically conductive manner,
**characterized in that**
- the bottom magnet pole (15) of the electromagnet (2) of the hydraulic valve (1) is formed by an annular disc (16) integrally cast in its plastic body (8) and, by means of a plurality of free sections (17, 17', 17") of the outer circumference (18) of this annular disc (16) and by means of a plurality of radial webs (19, 19', 19") arranged at the outer circumference (18) of this annular disc (16), is designed both as an element for fastening the magnet housing (5) to the hydraulic valve (1) and as an element for fastening the hydraulic valve (1) to the engine block (20) of the internal combustion engine.

2. Hydraulic valve according to Claim 1, **characterized in that** the annular disc (16) forming the bottom magnet pole (15) is preferably formed at its outer circumference (18) with three circular-ring-segment-shaped radial webs (19, 19', 19''), arranged offset from one another by 120°, and with three free sections (17, 17', 17'') which are arranged offset from one another by 120° and which each have an identical segment length in the circumferential direction.

3. Hydraulic valve according to Claim 2, **characterized in that** the annular disc (16) forming the bottom magnet pole (15) is formed at its inner circumference with a coaxial annular collar (21) which projects into the armature space (10) of the longitudinal bore (9) of the plastic body (8) and around which a plurality of coaxial apertures (22) are arranged as plastic transitions for fixing the position of the annular disc (16) in the plastic body (8).

4. Hydraulic valve according to Claim 2, **characterized in that** the magnet housing (5) of the electromagnet (2), due to three notches (23, 23', 23'') at its valve-stem-side marginal part (24), these notches (23, 23', 23'') being arranged offset from one another by 120°, preferably has three crenelated axial webs (25, 25', 25'') which are arranged offset from one another by 120° and each have an identical segment length in the circumferential direction.

5. Hydraulic valve according to Claim 4, **characterized in that** the notches (23, 23', 23'') of the magnet housing (5), in the fitted state of the hydraulic valve (1), rest on the radial webs (19, 19', 19'') of the bottom magnet pole (15), whereas the axial webs (25, 25', 25'') of the magnet housing (5), which extend between the radial webs (19, 19', 19'') of the bottom magnet pole (15), are flanged around the free sections (17, 17', 17'') of the outer circumference (18) of the bottom magnet pole (15).

6. Hydraulic valve according to Claim 1, **characterized in that** the hydraulic valve (1) is arranged so as to rest with the radial webs (19, 19', 19") of the bottom magnet pole (15) on a step (26) of a stepped bore (27) in the engine block (20) of the internal combustion engine and can be radially and axially fixed on the engine block (20) by local displacement of material from the surface (28) of the engine block (20) into the stepped bore (27), for example by caulking.

7. Hydraulic valve according to Claim 3, **characterized in that** the plastic body (8) has a plurality of longitudinal ribs (30) on the wall of that part of its axial longitudinal bore (9) which is designed as armature space (10), these longitudinal ribs (30) being arranged in a uniformly distributed manner over the circumference and forming together with the top magnet pole (14) of the electromagnet (2) a continuously smooth armature guide of the magnet armature (11).

8. Hydraulic valve according to Claim 1, **characterized in that** that part of the axial longitudinal bore (9) of the plastic body (8) which is designed as control region (12) is designed as a local diameter reduction (32) of the longitudinal bore (9) in the valve stem (7), this diameter reduction (32) having, in each case on the entry side and exit side, a first and a second ball valve seat (33, 34) and also a countersunk transition (35, 36) to the diameter of the longitudinal bore (9) of the plastic body (8).

9. Hydraulic valve according to Claim 8, **characterized in that** the pressure connection (P) is preferably formed by the orifice (37) at which the axial longitudinal bore (9) of the plastic body (8) opens out from the valve stem (7), whereas the consumer connection (A) and the tank connection (T) are preferably designed as transverse bores (38, 39) through the valve stem (7), which cross the longitudinal bore (9) axially above and centrally relative to its diameter reduction (32).

10. Hydraulic valve according to Claim 9, **characterized in that** the closing body (13) of the hydraulic valve (1) essentially comprises a cylindrical pin (44) which is in interaction with the magnet armature (11) by means of its one end face (45), which bears against the magnet armature (11), and by means of a centering spigot (46) which is integrally formed on this end face (45), is reduced in diameter and projects into an axial bore (47) of the magnet armature (11).

11. Hydraulic valve according to Claim 10, **characterized in that** the closing body (13), at the lateral surface of the cylindrical pin (44), has a plurality of axial guide ribs (48), extending away radially, for centring it in the longitudinal bore (9) of the plastic body (8) and, at its other end face (51), is designed as a hemisphere which correlates with the first ball valve seat (33) at the diameter reduction (32) of the longitudinal bore (9).

12. Hydraulic valve according to Claim 11, **characterized in that** the closing body (13), at the other end face (51) of the cylindrical pin (44), additionally has a push rod (52) which projects through the diameter reduction (32) of the longitudinal bore (9) of the plastic body (8) and is in interaction with a loose closing ball (53) which correlates with the second ball valve seat (34) at the diameter reduction (32) of the longitudinal bore (9).

13. Hydraulic valve according to Claim 12, **characterized in that** the loose closing ball (53) correlating with the second ball valve seat (34) is held in an axially movable manner in a cage (54) which is arranged in the orifice (37) of the axial longitudinal bore (9) of the plastic body (8) and which is preferably formed by a plurality of elastic arms (55) integrally formed coaxially on the diameter reduction (32) of the longitudinal bore (9) of the plastic body (8).

## Revendications

1. Electrovanne hydraulique, notamment distributeur 3/2, pour la commande d'une distribution variable d'un moteur à combustion interne, dotée des caractéristiques suivantes .
• La vanne hydraulique (1) est constituée d'une part d'un électroaimant (2) avec un noyau de bobine (4) disposé sur une armature de bobine (3) et d'un boîtier d'aimant (5) entourant le noyau de bobine (4),
• La vanne hydraulique (1) est constituée d'autre part d'une partie hydraulique (6) avec une tige de soupape (7), qui présente une prise pression (P), une prise réservoir (T) et une prise utilisateur (A).
• L'armature de bobine (3) de l'électroaimant (2) et la tige de soupape (7) de la partie hydraulique (6) forment un corps en plastique d'une pièce (8) qui présente axialement un trou longitudinal (9) avec différents diamètres.
• Le trou longitudinal (9) est configuré d'une part comme une chambre d'induit (10) pour un induit d'aimant mobile axialement (11) et d'autre part comme une zone de commande (12) pour un corps de fermeture (13) relié avec l'induit d'aimant (11).
• Le boîtier d'aimant (5) forme en même temps avec un collet annulaire pénétrant dans la chambre d'induit (10) du trou longitudinal (9) du corps en plastique (8) un pôle magnétique supérieur (14) de l'électroaimant (2).
• un pôle magnétique inférieur (15) de l'électroaimant (2) pénètre également dans la chambre d'induit (10) du trou longitudinal (9) du corps en plastique (8) et est relié magnétiquement avec le boîtier d'aimant (5).
**caractérisée en ce que**
• le pôle magnétique inférieur (15) de l'électroaimant (2) de la vanne hydraulique (1) est formé par une bague annulaire (16) moulée dans le corps en plastique (8) et est constitué par plusieurs découpures libres (17, 17', 17'') de la périphérie extérieure (18) de cette bague annulaire (16) ainsi que par plusieurs ailettes radiales (19, 19', 19'') disposées sur la périphérie extérieure (18) de cette bague annulaire (16) en guise aussi bien d'élément de fixation du boîtier d'aimant (5) sur la vanne hydraulique (1) que d'élément de fixation de la vanne hydraulique (1) sur le bloc moteur (20) du moteur à combustion interne.

2. Vanne hydraulique selon la revendication 1, **caractérisée en ce que** la bague annulaire (16) formant le pôle magnétique inférieur (15) est constituée sur sa périphérie extérieure (18) de préférence de trois ailettes radiales (19, 19', 19'') en forme de segments d'anneau décalées de 120° les unes par rapport aux autres ainsi que de trois découpures libres (17, 17', 17'') décalées de 120° les unes par rapport aux autres qui présentent chacune une même longueur de segment dans la direction périphérique.

3. Vanne hydraulique selon la revendication 2, **caractérisée en ce que** la bague annulaire (16) formant le pôle magnétique inférieur (15) est constituée sur sa périphérie intérieure d'un collet annulaire (21) coaxial pénétrant dans la chambre d'induit (10) du trou longitudinal (9) du corps en plastique (8), autour duquel sont disposés plusieurs perçages coaxiaux (22) faisant office de passages en plastique pour la fixation en place de la bague annulaire (16) dans le corps en plastique (8).

4. Vanne hydraulique selon la revendication 2, **caractérisée en ce que** le boîtier d'aimant (5) de l'électroaimant (2) présente sur sa partie périphérique (24) du côté tige de soupape trois ailettes axiales (25, 25', 25'') en forme de créneaux de préférence décalées de 120° les unes par rapport aux autres par trois encoches (23, 23', 23'') décalées de 120° les unes par rapport aux autres, qui présentent chacune une même longueur de segment dans la direction périphérique.

5. Vanne hydraulique selon la revendication 4, **caractérisée en ce que** les encoches (23, 23', 23'') du boîtier d'aimant (5) reposent, à l'état monté de la vanne hydraulique (1), sur les ailettes radiales (19, 19', 19'') du pôle magnétique inférieur (15), tandis que les ailettes axiales (25, 25', 25'') du boîtier d'aimant (5) s'étendant entre les ailettes radiales (19, 19', 19'') du pôle magnétique inférieur (15) sont rabattues autour des découpures libres (17, 17', 17'') de la périphérie extérieure (18) du pôle magnétique inférieur (15).

6. Vanne hydraulique selon la revendication 1, **caractérisée en ce que** la vanne hydraulique (1) avec les ailettes radiales (19, 19', 19'') du pôle magnétique inférieur (15) repose sur un épaulement (26) d'un trou étagé (27) dans le bloc moteur (20) du moteur à combustion interne et peut être fixée radialement et axialement en refoulant localement le matériau de la surface (28) du bloc moteur (20) dans le trou étagé (27), par exemple par matage.

7. Vanne hydraulique selon la revendication 3, **caractérisée en ce que** le corps en plastique (8) présente sur la paroi de la partie configurée en chambre d'induit (10) de son trou longitudinal axial (9) plusieurs nervures longitudinales (30) réparties de manière uniforme sur la périphérie qui forment avec le pôle magnétique (14) de l'électroaimant (2) un guide d'induit lisse continu pour l'induit d'aimant (11).

8. Vanne hydraulique selon la revendication 1, **caractérisée en ce que** la partie configurée en zone de commande (12) du trou longitudinal axial (9) du corps en plastique (8) est configurée comme une diminution de diamètre locale (32) du trou longitudinal (9) dans la tige de soupape (7) qui présente respectivement du côté entrée et du côté sortie un premier et un deuxième siège de soupape à boulet (33, 34) ainsi qu'un passage de diminution (35, 36) jusqu'au diamètre du trou longitudinal (9) du corps en plastique (8).

9. Vanne hydraulique selon la revendication 8, **caractérisée en ce que** la prise pression (P) est formée de préférence par l'embouchure (37) du trou longitudinal axial (9) du corps en plastique (8) hors de la tige de soupape (7), tandis que la prise utilisateur (A) ainsi que la prise réservoir (T) sont configurées de préférence comme des trous transversaux (38, 39) à travers la tige de soupape (7) croisant axialement le trou longitudinal (9) au-dessus et au milieu de sa diminution de diamètre (32).

10. Vanne hydraulique selon la revendication 9, **caractérisée en ce que** le corps de fermeture (13) de la vanne hydraulique (1) est constitué essentiellement d'une goupille cylindrique (44) qui est en relation active avec l'induit d'aimant (11) par sa face frontale (45) reposant contre l'induit d'aimant (11) et par une broche de centrage de diamètre réduit (46) formée sur cette face frontale (45) qui pénètre dans un trou axial (47) de l'induit d'aimant (11).

11. Vanne hydraulique selon la revendication 10, **caractérisée en ce que** le corps de fermeture (13) présente sur la surface latérale de la goupille cylindrique (44) plusieurs nervures de guidage axiales (48) s'étendant radialement pour son centrage dans le trou longitudinal (9) du corps en plastique (8) et est configuré sur son autre face frontale (51) comme un hémisphère qui s'apparie avec le premier siège de soupape à boulet (33) au niveau de la diminution de diamètre (32) du trou longitudinal (9).

12. Vanne hydraulique selon la revendication 11, **caractérisée en ce que** le corps de fermeture (13) présente en outre sur l'autre face frontale (51) de la goupille cylindrique (44) une tige de poussoir (52) traversant la diminution de diamètre (32) du trou longitudinal (9) du corps en plastique (8), qui est en relation active avec un boulet de fermeture mobile (53) s'appariant avec le deuxième siège de soupape à boulet (34) au niveau de la diminution de diamètre (32) du trou longitudinal (9).

13. Vanne hydraulique selon la revendication 12, **caractérisée en ce que** le boulet de fermeture mobile (53) s'appariant avec le deuxième siège de soupape à boulet (34) est maintenu mobile axialement dans une cage (54) disposée dans l'embouchure (37) du trou longitudinal axial (9) du corps en plastique (8) qui est formée de préférence par plusieurs bras élastiques (55) formés de manière coaxiale au niveau de la diminution de diamètre (32) du trou longitudinal (9) du corps en plastique (8).
